(19) Europäisches Patentamt / European Patent Office / Office européen des brevets

(11) **EP 2 936 056 B1**

(12) **FASCICULE DE BREVET EUROPEEN**

(45) Date de publication et mention
de la délivrance du brevet:
**09.08.2017   Bulletin 2017/32**

(51) Int Cl.:
***G01C 19/5726*** *(2012.01)*   ***G01C 19/5762*** *(2012.01)*
***G01C 25/00*** *(2006.01)*

(21) Numéro de dépôt: **13823955.3**

(86) Numéro de dépôt international:
**PCT/EP2013/077926**

(22) Date de dépôt: **23.12.2013**

(87) Numéro de publication internationale:
**WO 2014/102246 (03.07.2014 Gazette 2014/27)**

(54) **GYROSCOPE A CALIBRATION SIMPLIFIEE ET PROCEDE DE CALIBRATION SIMPLIFIEE D'UN GYROSCOPE**

GYROSKOP MIT VEREINFACHTER KALIBRIERUNG UND VEREINFACHTES KALIBRIERVERFAHREN FÜR EIN GYROSKOP

GYROSCOPE WITH SIMPLIFIED CALIBRATION AND SIMPLIFIED CALIBRATION METHOD FOR A GYROSCOPE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.12.2012   FR 1262743**

(43) Date de publication de la demande:
**28.10.2015   Bulletin 2015/44**

(73) Titulaire: **Commissariat à l'Énergie Atomique et aux Énergies Alternatives
75015 Paris (FR)**

(72) Inventeur: **WALTHER, Arnaud
82008 Unterhaching (DE)**

(74) Mandataire: **Brevalex
95, rue d'Amsterdam
75378 Paris Cedex 8 (FR)**

(56) Documents cités:
**WO-A1-2004/042324     FR-A1- 2 953 012
US-A1- 2007 144 255**

**Description**

## DOMAINE TECHNIQUE ET ART ANTÉRIEUR

La présente invention se rapporte à un gyroscope de type MEMS et/ou NEMS à calibration simplifiée et à un procédé de calibration simplifié d'un gyroscope.

Les gyroscopes de type MEMS (MicroElectroMechanical Systems en terminologie anglaise) et/ou NEMS (NanoElectroMechanical Systems) en terminologie anglaise sont en général composés d'une masse ou d'un ensemble de masses suspendues et reliées au substrat et entre elles par des ressorts. La masse ou les masses possédant plusieurs degrés de liberté, est/sont mise/s en vibration asservie à résonance selon l'un des modes, dit mode d'excitation selon un 1er degré de liberté. En présence d'une rotation, une force de Coriolis apparait et met en vibration la masse ou une partie de l'ensemble des masses selon un 2ème degré de liberté orthogonal au 1er et correspondant à un mode dit mode de détection.

La plupart des gyroscopes utilise des découplages mécaniques pour séparer la partie excitation de la partie détection. En cas de défaut mécanique sur l'excitation, un mouvement selon la direction de détection sera généré et se reportera sur la masse de détection.

Un biais existe dans les gyroscopes. Ce biais a une composante Bi en phase avec le signal de Coriolis $\Omega$, désigné biais en phase, et une composante en quadrature Bq, désigné biais en quadrature. On obtient donc par la mesure sur la masse de détection le signal S suivant :

$$S = (B_i + \Omega)\cos(\omega_0 t) + B_q \sin(\omega_0 t) \quad (1)$$

Dans le cas idéal, en démodulant le signal fourni par le gyroscope, le biais en quadrature devrait être éliminé. Cependant la démodulation n'est jamais parfaite et présente une erreur de phase $\phi_{err}$ et un bruit de phase $\phi_{noise}$.

Le signal démodulé est le suivant:

$$S'_{dé\mathrm{mod}} = (B_i + \Omega)\cos(\varphi_{err} + \varphi_{noise}) + B_q \sin(\varphi_{err} + \varphi_{noise}) \approx B_i + B_q \varphi_{err} + \Omega + B_q \varphi_{noise}$$

Le biais en quadrature fait donc apparaître une composante de biais dans le signal démodulé et une composante de bruit.

Par conséquent, le biais en quadrature ne peut être éliminé.

La présence de ce biais est due à des défauts technologiques lors de la réalisation du gyroscope.

Le principal défaut est un coefficient de raideur non-diagonal $k_{xy}$, qui génère le biais en quadrature. Dans le cadre d'un mode d'excitation dans le plan et d'un mode détection dans le plan, le gyroscope étant alors désigné "gyroscope Z", car il permet de détecter les rotations autour de l'axe hors plan, ce biais en quadrature est notamment dû à des variations locales de surgravure des ressorts d'excitation. Ce phénomène est décrit dans les documents S. V. Iyer, "Modeling and simulation of non-idealities in a Z-axis CMOS-MEMS gyroscope", Ph.D. dissertation, Dept. Elect. and Comp Eng., Carneggie Mellon Univ., Pittsburg, PA, 2003, et E. Tatar, S. E. Alper, T. Akin, "Effect of quadrature error on the performance of a fully decoupled MEMS gyroscope". Proc. IEEE MEMS 2011, Cancun, MEXICO, January 23-27, 2011, pp. 569-572.

Dans le cadre d'un mode d'excitation dans le plan et d'un mode détection hors plan, le gyroscope étant alors désigné "gyroscope X ou Y, ce biais est notamment dû à l'angle de gravure des ressorts d'excitation. Ce phénomène est décrit dans les documents P. Merz, W. Pilz, F. Senger, K. Reimer, M. Grouchko, T. Pandhumsoporn, W. Bosch, A. Cofer, S. Lassig, "Impact of DRIE on Vibratory MEMS gyroscope performances", Proc. Transducers&Eurosensors 2007, Lyon, France, Jun. 10-14, 2007 pp. 1187-1190, et M. S. Weinberg, A. Kourepenis, "Error sources in in-plane silicon tuning-fork MEMS gyroscopes", Journal of Microelectromechanical Systems, vol. 15, no. 3, pp. 42-54, Jun. 2006.

Ce biais en quadrature se traduit par un mouvement d'excitation non parfaitement colinéaire avec l'axe d'excitation.

Un coefficient d'amortissement non-diagonal $c_{xy}$ et une excitation directe du mode de détection par les électrodes d'excitation $F_{exc}{}^y$ peuvent aussi être une source de biais, soit en phase soit en quadrature.

Comme indiqué ci-dessus, la plupart des gyroscopes met en oeuvre une masse d'excitation et une masse de détection. En cas de défaut mécanique sur la masse d'excitation, un mouvement selon la direction de détection sera généré et se reportera sur la masse de détection.

Les équations du système masse d'excitation et masse de détection sont les suivantes :

$$m\ddot{x} + c_x\dot{x} + k_x x = F_{exc}$$

$$y_1 = y_{1q} + y_{1i} = \alpha x + \beta\dot{x}$$

$$m_2\ddot{y}_2 + c_{y2}\dot{y}_2 + k_{y2}(y_2 - y_1) = 2m_2\dot{x}\Omega$$

$$Y_{2q} = \frac{Y_{1q}}{1 - \left(\dfrac{\omega_{0exc}}{\omega_{0det}}\right)^2 + i\dfrac{\omega_{0exc}}{Q_{det}\omega_{0det}}}, Y_{2i} = \frac{Y_{1i}}{1 - \left(\dfrac{\omega_{0exc}}{\omega_{0det}}\right)^2 + i\dfrac{\omega_{0exc}}{Q_{det}\omega_{0det}}}$$

$$\frac{Y_\Omega}{\Omega} = \frac{2i\omega_{0exc}X}{\omega_{0det}{}^2\left(1 - \left(\dfrac{\omega_{0exc}}{\omega_{0det}}\right)^2 + i\dfrac{\omega_{0exc}}{Q_{det}\omega_{0det}}\right)}$$

$\omega_{0exc}$ étant la fréquence d'excitation,
$\omega_{0det}$ étant la fréquence de détection,
$Q_{det}$ étant le facteur de qualité.

Le mouvement en biais de la masse d'excitation est amplifié par l'oscillateur du mode de détection par un facteur A qu'on appellera facteur d'amplification :

$$A = \left| \frac{1}{1 - \left(\dfrac{\omega_{0exc}}{\omega_{0det}}\right)^2 + i\dfrac{\omega_{0exc}}{Q_{det}\omega_{0det}}} \right| = \frac{1}{\sqrt{\left(1 - \left(\dfrac{\omega_{0exc}}{\omega_{0det}}\right)^2\right)^2 + \left(\dfrac{\omega_{0exc}}{Q_{det}\omega_{0det}}\right)^2}}$$

En cas de mode de fonctionnement en fréquences accordées, i.e. la fréquence d'excitation et la fréquence de détection sont égales, le facteur d'amplification A vaut :

$$A = Q_{det}$$

Le facteur de qualité $Q_{det}$, est de l'ordre de 1000 à 100000.
Dans ce cas, la sensibilité mécanique vaut :

$$\frac{Y_\Omega}{\Omega} = \frac{2XQ_{det}}{\omega_{0exc}} = \frac{2XA}{\omega_{0exc}}$$

En cas de mode de fonctionnement en fréquences non-accordées, i.e. la fréquence d'excitation est inférieure à la fréquence de détection, le facteur d'amplification vaut :

$$A \approx \frac{1}{2\dfrac{\Delta\omega}{\omega_{\det}}}$$

Le facteur d'amplification A est de l'ordre de 2 et 100. Pour une fréquence de fonctionnement $f_{0exc}$ à 20kHz et un écart de 1kHz avec $f_{0det}$, ce facteur vaut 10. Dans ce cas, la sensibilité mécanique vaut :

$$\frac{Y_\Omega}{\Omega} = \frac{2\omega_{0exc}X}{2\dfrac{\Delta\omega}{\omega_{0\det}}\omega_{0\det}^{\;2}} = \frac{2X}{\omega_{0exc}}A\times(1-\frac{1}{2A})^2$$

Il est à noter que la fréquence d'excitation est connue, puisque le mode d'excitation est asservi à résonance.

Cependant ce facteur d'amplification peut fortement varier sur l'ensemble d'un même substrat ou d'un substrat à l'autre. En particulier, en fonctionnement en fréquences non-accordées, il peut facilement y avoir une variation d'un facteur 2, voire plus, selon l'écart de fréquence nominal recherché. De plus ce facteur d'amplification varie avec la température.

Par ailleurs, dans le cas d'un gyroscope mettant en oeuvre une détection capacitive, le mouvement selon le mode de détection étant transformé en variation de capacité, la variation de capacité dépend de la variation d'entrefer entre les électrodes lors du mouvement de la masse de détection. Or la dimension initiale de l'entrefer est susceptible de varier d'une puce à l'autre, mais est en général maîtrisée à quelques pourcents près, voire moins d'1%.

L'existence de ces défauts technologiques impose de calibrer les gyroscopes avant leur utilisation afin de déterminer pour une ou plusieurs températures le biais inhérent à chaque capteur et connaître la sensibilité du capteur.

Une telle calibration est réalisée au moyen d'une table tournante. En particulier, pour les capteurs multiaxes, il faut soit faire un nombre de mesures proportionnel au nombre d'axes sur des tables différentes, soit utiliser des tables complexes, comme celle qui est décrite dans le document US 6 209 383.

Du fait de la dérive des gyroscopes, des corrections en température ou des recalibrations régulières sont à prévoir.

La correction en température peut se faire par une calibration préalable en température puis, une fois les coefficients d'évolution des propriétés en température connus, par une mesure de température du capteur en fonctionnement.

Cette mesure peut être réalisée par la mesure de la fréquence de résonance en excitation, qui est connue. Le signal de sortie est alors corrigé en tenant compte de la température.

Des recalibrations régulières peuvent aussi être faites. Par exemple, le document US 2011/0172820 décrit une méthode de recalibration d'un gyroscope monté dans un robot. La recalibration est effectuée lorsque le robot est statique à partir des signaux émis par le gyroscope. Dans le document, US 2011/0178707, la recalibration met en oeuvre d'autres capteurs tels que des accéléromètres et des magnétomètres.

Le document FR 2 953 012 A1 décrit un gyroscope ayant une structure en diapason à deux masses mobiles excitées selon une direction d'excitation donnée à l'aide de moyens d'excitation. Cette structure possède en outre des premiers moyens de détection destinés à détecter le déplacement des masses selon une direction de détection orthogonale à la direction d'excitation et fournissant un premier signal de détection. La structure comporte également des deuxièmes moyens de détection destinés à détecter le mouvement d'excitation selon l'axe de détection et fournissant un deuxième signal de détection ainsi que des moyens de traitement des signaux de détection permettant de déterminer une vitesse de rotation subie par le gyroscope.

## EXPOSÉ DE L'INVENTION

C'est par conséquent un but de la présente invention d'offrir un gyroscope pouvant être calibré et recalibré de manière simplifiée et une méthode de calibration et recalibration simplifiée d'un gyroscope.

Le but précédemment énoncé est atteint par un gyroscope comportant une masse mobile en excitation et une masse mobile en détection, des moyens pour appliquer un signal d'excitation à la masse d'excitation dans une première direction, des moyens de détection du déplacement de la masse de détection dans une deuxième direction orthogonale à la première direction et des moyens de détection du déplacement de la masse d'excitation dans la deuxième direction, et des moyens de traitement des signaux de détection émis par les moyens de détection des mouvements de la masse de détection et les moyens de détection des mouvements de la masse d'excitation dans la deuxième direction, de sorte à obtenir au moins un paramètre de calibration du gyroscope.

Par exemple, ces paramètres peuvent être le biais en phase, le biais en quadrature et le facteur d'amplification.

L'invention permet ainsi de suivre l'évolution du biais et/ou de la sensibilité des capteurs en fonctionnement.

En d'autres termes, le gyroscope mesure en plus du déplacement de la masse de détection le long de la direction de détection afin de déterminer les forces de Coriolis, le déplacement de la masse d'excitation le long de la direction de détection, ce déplacement étant dû au biais. En réalisant cette mesure, et en traitant celle-ci avec la mesure de la masse de détection, il est possible de déterminer le biais du gyromètre, biais en phase et biais en quadrature, le facteur d'amplification et la vitesse de rotation.

La connaissance de ces paramètres permet de calibrer et recalibrer le gyromètre.

Comme mentionnés ci-dessus, ces paramètres varient avec la température, si une variation de la température de l'environnement est détectée, les paramètres sont à nouveau déterminés de manière très simple grâce à l'invention, ce qui permet de réaliser une recalibration simplifiée du gyromètre.

Grâce à l'invention, la calibration peut être effectuée sans table tournante, et la recalibration est réalisée sans mise en oeuvre de capteurs supplémentaires, ni nécessité d'une position statique du gyromètre; celle-ci peut être réalisée lors du fonctionnement normal du gyroscope, ce qui simplifie la recalibration.

La présente invention a alors pour objet un gyroscope comportant :

- au moins un oscillateur d'excitation comportant au moins une masse d'excitation suspendue par rapport à un substrat présentant une seule direction de déplacement en excitation,
- au moins un oscillateur en détection comportant au moins une masse de détection suspendue par rapport à la masse d'excitation apte à se déplacer selon la direction d'excitation et selon une direction de détection orthogonale à la direction d'excitation,
- des moyens d'excitation de la masse d'excitation dans la direction de déplacement en excitation,
- des premiers moyens de détection destinés à détecter le déplacement de la masse de détection selon ladite direction de détection et fournissant un premier signal de détection,

le gyroscope comportant également :

- des deuxièmes moyens de détection destinés à détecter le déplacement de la masse d'excitation selon ladite direction de détection et fournissant un deuxième signal de détection, et
- des moyens de traitement du premier signal de détection et du second signal de détection de sorte à déterminer une vitesse de rotation subie par le gyromètre et à fournir au moins un paramètre de calibration dudit gyroscope.

La vitesse de rotation du gyroscope est déterminée à partir des forces de Coriolis.

De préférence, ledit au moins un paramètre de calibration dudit gyroscope est le coefficient d'amplification caractérisant la sensibilité du gyroscope et/ou le biais du gyroscope. Le coefficient d'amplification permet de déterminer la sensibilité du gyroscope à partir d'équations connues de l'homme de métier et notamment celles données ci-dessus.

Les moyens de traitement du premier signal de détection et du second signal de détection peuvent être tels qu'ils déterminent à partir du premier signal de détection , le biais en quadrature et la somme du biais en phase et de la vitesse de rotation, qu'ils déterminent à partir du deuxième signal de détection, le rapport du biais en phase sur le coefficient d'amplification et le rapport du biais en quadrature sur le coefficient d'amplification, et qu'il déterminent le coefficient d'amplification en effectuant une division du biais en quadrature sur le rapport du biais en quadrature sur le coefficient d'amplification

Les moyens de traitement du premier signal de détection et du second signal de détection peuvent être tels qu'ils effectuent une multiplication du rapport du biais en phase sur le coefficient d'amplification avec le coefficient d'amplification déterminé par ladite division.

De préférence, les moyens de traitement comportent des moyens d'amplification du premier et du deuxième signal de détection et des premiers moyens aptes à démoduler les signaux amplifiés.

De préférence également, les moyens de traitement comportent en outre des deuxièmes moyens pour démoduler les signaux amplifiées préalablement aux premiers moyens de démodulation et pour filtrer lesdits signaux afin de ramener les signaux démodulés à la fréquence d'actionnement du gyroscope.

Dans un exemple de réalisation, les premiers et deuxièmes moyens de détection sont de type capacitif. Les moyens d'amplification des signaux mesurés peuvent comporter un amplificateur monté en parallèle avec au moins une capacité.

Dans un autre, exemple de réalisation, les premiers et deuxièmes moyens de détection sont de type piézorésistifs. Les moyens d'amplification des signaux mesurés peuvent comporter un ou plusieurs amplificateurs à entrées différentielles.

On entend par "amplificateur à entrées différentielles", un amplificateur permettant d'amplifier la différence des signaux d'entrée

Par exemple, les premiers moyens aptes à démoduler les signaux amplifiés comportent un filtre du deuxième signal de détection et un filtre du premier signal de détection , le filtre du deuxième signal étant un filtre à bande passante inférieure à celle d'un filtre du premier signal de sorte à avoir une résolution proche ou identique sur le premier signal de détection et le deuxième signal de détection.

Le gyroscope peut comporter des moyens de déphasage du deuxième signal de détection de sorte à reproduire un déphasage de l'oscillateur de détection, lesdits moyens de déphasage appliquant ce déphasage avant la démodulation du deuxième signal de détection par les premiers moyens de démodulation.

De préférence, le gyroscope présente des fréquences d'excitation et de détection non-accordées.

De manière avantageuse, le masse d'excitation est suspendue par rapport au substrat par des moyens de suspension de type ressort, lesdits moyens de suspension présentant une première constante de raideur selon la direction de détection et une deuxième constante de raideur selon la direction d'excitation, la première constante de raideur étant sensiblement supérieure à la deuxième constante de raideur.

Le rapport de la première constante de raideur sur la deuxième constante de raideur peut être supérieur à 100.

Le gyroscope peut comporter des moyens de connexion, par exemple d'un ou des interrupteurs, en amont des moyens d'amplification pour effectuer de façon périodique la détermination dudit au moins un paramètre de calibration dudit gyroscope

La présente invention a également pour objet un procédé de calibration d'un gyroscope comportant au moins un oscillateur d'excitation comportant au moins une masse d'excitation présentant une seule direction de déplacement en excitation, et au moins un oscillateur de détection comportant au moins une masse de détection apte à se déplacer selon la direction d'excitation et selon une direction de détection, comportant les étapes :

a) mesure du déplacement de la masse de détection dans la direction de détection, formant un premier signal de détection,

b) mesure du déplacement de la masse d'excitation selon la direction de détection, formant un deuxième signal de détection,

c) traitement du premier signal de détection et du second signal de détection de sorte à déterminer une vitesse de rotation subie par le gyromètre et à fournir au moins un paramètre de calibration dudit gyroscope,

d) calibration du gyroscope sur la base de ce paramètre.

L'étape c) de traitement du premier et du deuxième signal peut comporter :

- le traitement du premier signal de détection de sorte à obtenir le biais en quadrature et la somme du biais en phase et de la vitesse de rotation,

- le traitement du deuxième signal de détection de sorte à obtenir le rapport du biais en phase sur le coefficient d'amplification et le rapport du biais en quadrature sur le coefficient d'amplification,

- la détermination du coefficient d'amplification en effectuant une division du biais en quadrature sur le rapport du biais en quadrature sur le coefficient d'amplification.

L'étape a) peut comporter les sous-étapes :

a1) d'amplification et de filtration du premier signal de détection,
a2) de démodulation du premier signal amplifié, et

l'étape b) peut comporter les sous-étapes :

b1) d'amplification et de filtration du deuxième signal de détection,
b2) de démodulation du deuxième signal amplifié.

Le procédé de calibration selon la revendication peut comporter les étapes de démodulation et filtre entre les étapes a1) et a2) et entre les étapes b1) et b2) pour ramener les premier et deuxième signaux amplifiés à la fréquence d'actionnement.

Dans un exemple où les signaux de détection sont capacitifs, les étapes a2) et b2) sont réalisées par un étage de lecture capacitive.

Dans un exemple où les signaux de détection sont piézorésistifs, les étapes a2) et b2) sont réalisées par un ou plusieurs amplificateurs à entrées différentielles

Le procédé est avantageusement mis en oeuvre de façon continue ou périodique ou ponctuellement à la suite d'une variation de l'environnement du gyroscope.

Le procédé peut être mis en oeuvre pendant la vie du gyroscope de sorte à le recalibrer.

L'étape de recalibration a de préférence lieu pendant le fonctionnement normal du gyroscope.

L'étape de recalibration peut être mise en oeuvre après la détection de la variation de la température de l'environnement du gyroscope.

## BRÈVE DESCRIPTION DES DESSINS

La présente invention sera mieux comprise à l'aide de la description qui va suivre et des dessins en annexes sur lesquels :

- la figure 1 est une vue de dessus d'un exemple d'une structure d'un gyroscope à détection capacitive auquel peut s'appliquer l'invention, le gyroscope étant un gyroscope de type Z,
- la figure 2A est une vue de dessus d'un autre exemple d'une structure d'un gyroscope à détection capacitive auquel peut s'appliquer l'invention, le gyroscope étant un gyroscope de type X/Y,
- la figure 2B est une vue de côté partielle de la structure de la figure 2A;
- la figure 3 est une vue de dessus d'un autre exemple d'une structure d'un gyroscope à détection capacitive de type disque oscillant auquel s'applique l'invention, le gyroscope étant un gyroscope de type XY,
- la figure 4 est une vue de dessus d'un autre exemple d'une structure d'un gyroscope à détection piézorésistive auquel s'applique l'invention, le gyroscope étant un gyroscope de type X/Y,
- la figure 5 est une vue de dessus d'un autre exemple d'une structure d'un gyroscope à détection piézorésistive auquel s'applique l'invention, le gyroscope étant un gyroscope de type Z,
- la figure 6 est une représentation d'un schéma de mesure des paramètres de calibration selon un procédé de calibration selon l'invention appliqué à un gyroscope à détection capacitive,
- la figure 7 est une représentation d'un schéma de mesure des paramètres de calibration selon un procédé de calibration selon l'invention appliqué à un gyroscope à détection piézorésistive,
- la figure 8 est une représentation graphique de la variation du facteur d'amplification A obtenu par simulation Xcos en fonction du temps en seconde,
- la figure 9 est une représentation graphique de la différence entre le biais de phase reconstruit par simulation et le biais de phase Bi mesuré sur la masse de détection en fonction du temps en seconde.

## EXPOSÉ DÉTAILLÉ DE MODES DE RÉALISATION PARTICULIERS

La présente invention porte sur la calibration et sur la recalibration de tout gyroscope comportant au moins une masse d'excitation et au moins une masse de détection. Nous allons décrire plusieurs exemples de structures de gyroscopes auxquelles s'applique l'invention, mais celles-ci ne sont aucunement limitatives et l'invention s'applique à toute autre structure de gyroscope à au moins une masse d'excitation et au moins une masse de détection, la masse d'excitation présentant un degré de liberté en déplacement selon l'axe d'excitation. En outre , des gyroscopes comportant plusieurs masses d'excitation reliées ensemble et couplées mécaniquement, chaque masse d'excitation ayant un degré de liberté pouvant être différent de celui des autres masses d'excitation et étant associée chacune à une masse de détection, ne sortent pas du cadre de la présente invention.

Il sera utilisé indifféremment "axe" ou "direction" pour désigner la direction de déplacement des masses.

Pour toutes les figures, les axes seront définis de la manière suivante, les axes X et Y sont contenus dans le plan de la feuille, l'axe X étant orienté horizontalement dans la représentation des structures et l'axe Y étant orienté verticalement dans la représentation des figures. L'axe Z est orthogonal aux axes X et Y et au plan de la feuille.

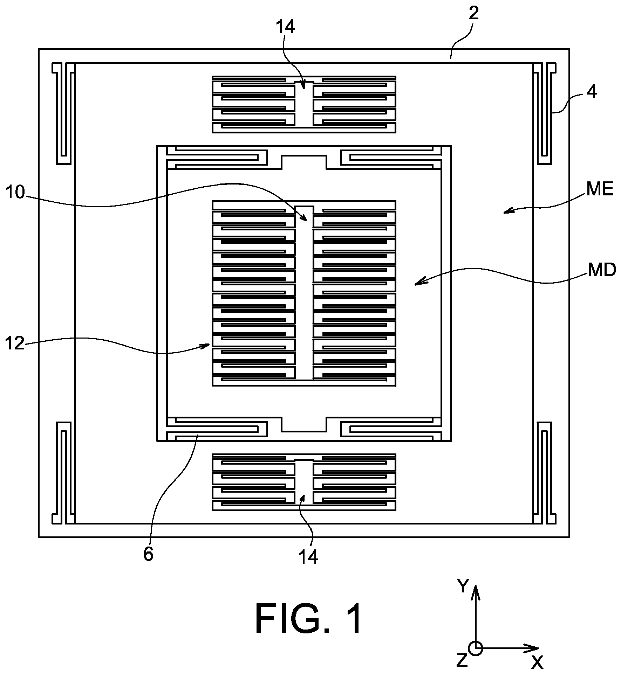

Sur la figure 1, on peut voir une structure de gyroscope S1 de type Z à détection capacitive.

La structure S1 comporte une masse d'excitation ME formant un cadre suspendu par rapport à un substrat 2 par des moyens de suspension 4 de type ressort, un masse de détection MD disposée à l'intérieur du cadre de la masse d'excitation ME et suspendue à celui-ci par l'intermédiaire de moyens de suspension 6 de type ressort. La masse d'excitation suspendue forme un oscillateur d'excitation et la masse de détection suspendue forme un oscillateur de détection 3.

Les moyens de suspension 4 de la masse d'excitation sont tels qu'ils l'autorisent à se déplacer dans la direction de l'axe X sous l'effet d'un signal d'excitation appliqué par des moyens d'excitation 8. Par exemple, les moyens d'excitation comportent typiquement des électrodes d'actionnement électrostatique, sous les forme d'une structure à peignes interdigités situés sur le bord extérieur de la structure selon la direction de l'axe X. Les peignes comprennent des électrodes fixes (solidaires du substrat 2 auxquelles on applique un potentiel électrostatique variable et des électrodes mobiles solidaires de la masse d'excitation. Des forces électrostatiques apparaissent alors entre les électrodes fixes et mobiles.

Les moyens de suspension 6 de la masse de détection sont tels qu'ils l'autorisent à se mouvoir en translation selon la direction de détection Y sous l'effet d'une force de Coriolis générée par une rotation autour de l'axe Z Des premiers moyens de détection 10 de type capacitif sont prévus pour détecter le déplacement de la masse de détection MD. Dans l'exemple représenté, les premiers moyens de détection 10 sont formés par deux paires de peignes d'électrodes interdigitées 12, un peigne de chaque paire étant porté par la masse de détection MD et un peigne de chaque paire 12 étant porté par le substrat 2. De manière avantageuse dans l'exemple représenté, la mise ne oeuvre de deux paires de peignes permet de symétriser la structure, mais ceci n'est pas limitatif. En mesurant une variation de capacité entre des paires d'électrodes 12 de chaque paire de peignes, il est possible de déterminer le mouvement de la masse de détection MD le long de l'axe Y. Le signal fourni par les premiers moyens de détection capacitif est désigné par C1 + $\Delta$C1.

En outre, la structure comporte des moyens de détection du déplacement de la masse d'excitation ME le long de l'axe Y, ce déplacement étant dû principalement au biais. Les forces de Coriolis participent peu à ce déplacement.

Les deuxièmes moyens de détection 14 sont de structure similaire à celle des premiers moyens de détection, ils comportent deux paires de peignes interdigités dont un peigne de chaque paire est porté par la masse d'excitation et un peigne de chaque paire étant porté par le substrat. Le signal fourni par les deuxièmes moyens de détection capacitif est désigné par C1' + $\Delta$C1'.

Il sera compris que la structure est telle que la masse d'excitation a idéalement un déplacement dans la direction d'excitation, mais comme cela été expliqué ci-dessus du fait des défauts technologiques lors de la fabrication des gyroscopes, la déplacement de la masse d'excitation a une composante principale dans la direction d'excitation et une composante secondaire dans la direction de détection.

Selon l'invention on prévoit de mesurer également cette composante et de l'utiliser pour déterminer des paramètres de calibration et de recalibration.

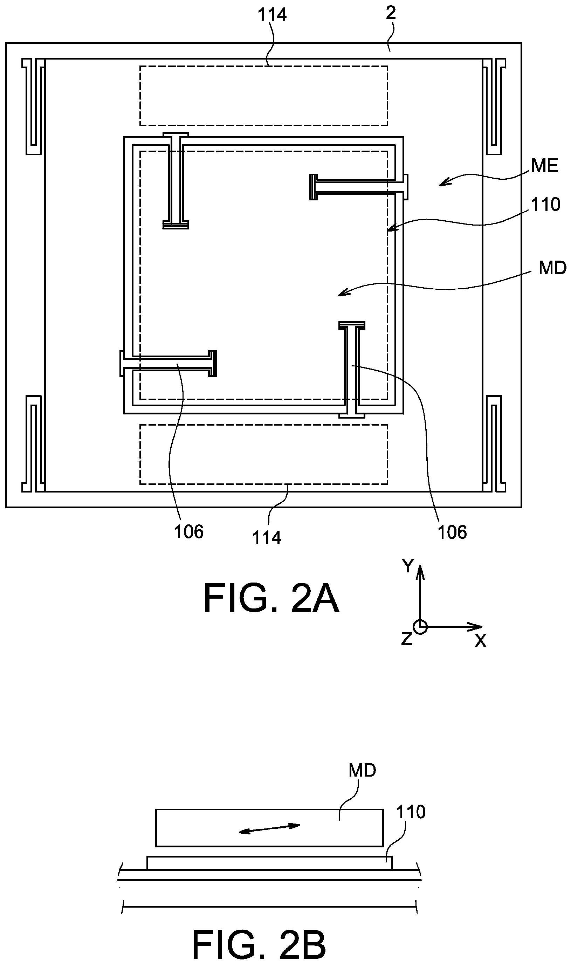

Sur les figures 2A et 2B, on peut voir un autre exemple de structure S2 de gyroscope à détection capacitive de type X/Y.

Dans cet exemple, les moyens d'excitation appliquent un signal d'excitation à la masse d'excitation ME le long de la direction X. Les moyens d'excitation sont par exemple de type électrostatique comme décrit ci-dessus en relation avec la structure S1.

Les moyens de suspension 106 de la masse de détection par rapport à la masse d'excitation ME sont tels qu'ils autorisent un déplacement en translation de la masse de détection le long de l'axe Z sous l'effet d'une force de Coriolis générée par une rotation autour de l'axe Y.

Les premiers moyens de détection 110 sont de type capacitif et formés par une paire d'électrodes dont l'une est portée par le substrat 2 et l'autre est formée par la masse de détection MD en regard de l'électrode portée par le substrat.

Les deuxième moyens de détections 114 sont de type capacitif et formés par deux paires d'électrodes. Une électrode de chaque paire est portée par le substrat 2 et l'autre électrode de chaque paire est formée par la masse d'excitation ME en regard de l'électrode portée par le substrat. Les électrodes portées par la masse d'excitation ME sont disposées de part et d'autre de la masse de détection MD le long de l'axe Y. Les deux électrodes 114 sont reliées électriquement. Cette disposition est avantageusement choisie afin de symétriser la structure. Cette disposition n'est pas limitative.

Sur la figure 2B, la flèche F symbolise le déplacement des masses dans la direction de détection.

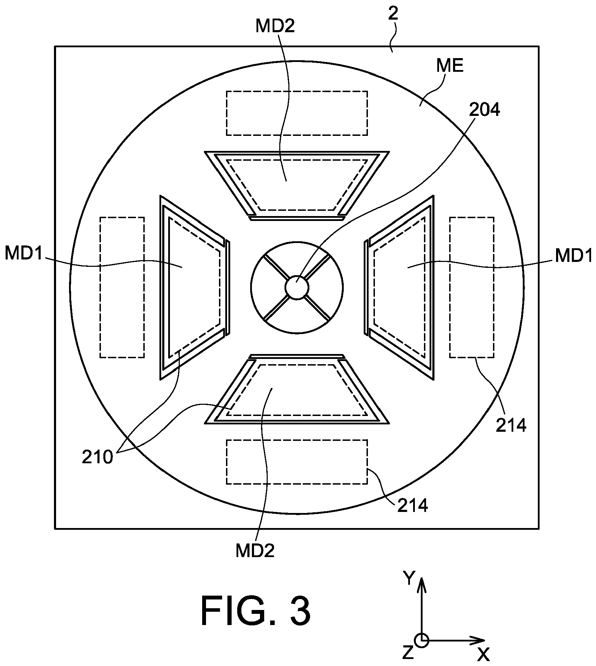

Sur la figure 3, on peut voir un autre exemple de structure S3 de gyroscope à détection capacitive de type XY. La structure S3 est de type disque oscillant.

Dans cet exemple la masse d'excitation ME a la forme d'un disque suspendu par rapport au substrat au niveau d'une partie centrale du disque par des moyens de suspension 204.

La structure comporte des moyens d'excitation, ceux-ci comportent typiquement des électrodes d'actionnement électrostatiques, par exemple de type électrodes interdigités. Ils sont par exemple situés sur le bord externe de la masse de détection, de sorte d'appliquer une force tangentielle au disque. Les moyens d'excitation mettent en mouvement la masse d'excitation en rotation autour de l'axe Z.

La structure comporte également quatre masses de détection MD1, MD2, suspendues dans le disque par des moyens de suspension de type poutre de torsion. Deux des masses de détection MD1 parmi les quatre sont aptes à pivoter autour de l'axe Y et les deux autres masses de détection MD2 sont aptes à pivoter autour de l'axe X.

Les premiers moyens de détection 210 sont formés par une paire d'électrodes associée à chaque masse de détection MD1, MD2, l'une des électrodes formée par la masse et l'autre sur le substrat 2 en regard.

Les deuxièmes moyens de détection 214 comportent quatre paires d'électrodes diamétralement opposées deux à deux. Chaque paire comporte une électrode sur la masse d'excitation et une électrode sur le substrat. Dans l'exemple représenté, chaque paire d'électrodes des deuxièmes moyens de détection sont alignés avec une paire d'électrodes des premiers moyens de détection le long d'un rayon du disque. Cette disposition est avantageuse. Les deux électrodes 214 selon l'axe X sont associées aux deux électrodes 210 de détection des masses MD1 selon l'axe X et permettent de faire les mesures de la force de Coriolis et du biais associés à la rotation d'axe X. Les masses MD1 sont excitées le long de l'axe Y, et une rotation autour de l'axe X entraîne une force de Coriolis le long de l'axe Z, le mouvement le long de l'axe Z est détecté par les électrodes 210 et 214.

De manière similaire, les électrodes le long de l'axe Y permettent de faire les mesures de la force de Coriolis et du biais associés à la rotation d'axe Y. Les masses MD2 sont excitées le long de l'axe X, et une rotation autour de l'axe Y entraîne une force de Coriolis le long de l'axe Z, le mouvement le long de l'axe Z est détecté par les électrodes 210 et 214.

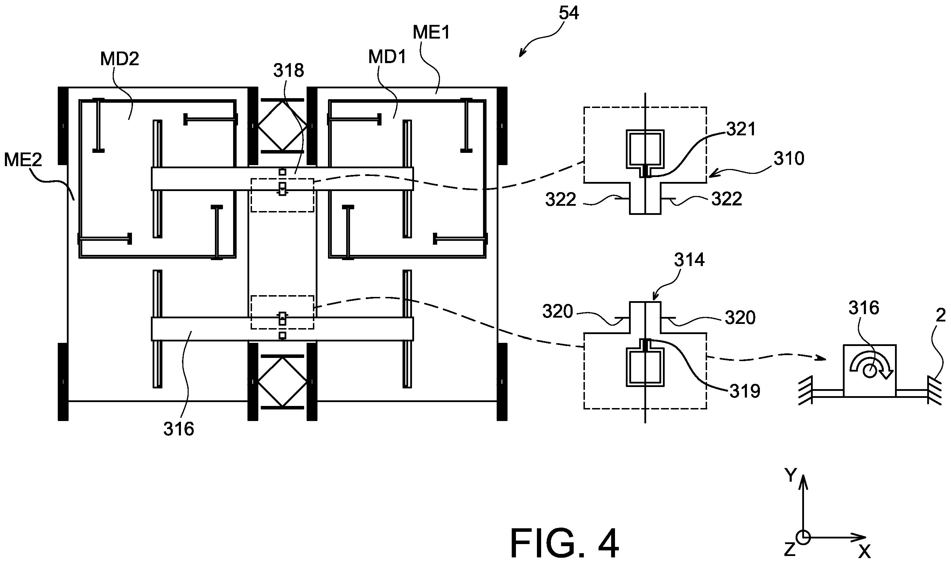

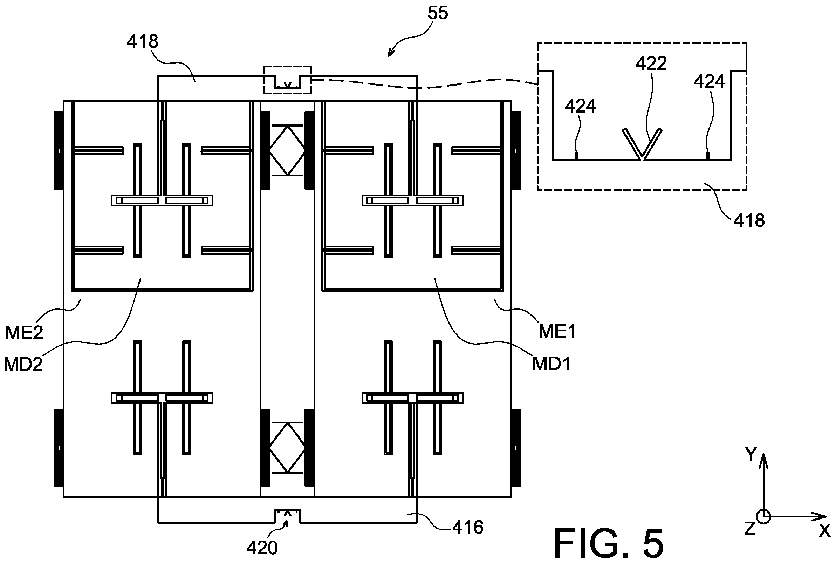

Sur les figures 4 et 5, on peut voir des exemples de structures de gyroscope à détection piézorésistive.

Sur la figure 4, il s'agit d'une structure S4 de gyroscope adapté à une détection X/Y.

Dans la représentation de la figure 4, il s'agit d'un gyroscope à détection Y.

La structure S4 comporte deux masses d'excitation ME1, ME2 reliées par une poutre 316. Les moyens d'excitation sont aptes à exciter les masses d'excitation ME1, ME2 le long de l'axe X, les masses ME1 et ME2 étant actionnées en opposition de phase.

La structure S4 comporte deux masses de détection MD1, MD2 chacune suspendue dans une partie ME1, ME2 de la masse d'excitation ME. Les deux masses de détection MD1, MD2 sont reliées par une poutre 318.

Les poutres 316, 318 sont, quant à elles, articulées sur le substrat 2 par des poutres déformables en torsion 319, 321 visibles sur les vues agrandies, respectivement, définissant l'axe de rotation des poutres. Cet axe de rotation est dans la direction Y. Les références 320 et 322 désignent des jauges de mesure piézorésistives formant les moyens de détection 314, 310 de la masse d'excitation et de la masse de détection respectivement.

Le mouvement de détection se fait selon l'axe Z, mais en opposition de phase entre les masses MD1 et MD2, ce mouvement de balancier entraînant les poutres 316 et 318 en rotation autour de l'axe Y.

Sur cette figure, du fait que les jauges 320, 322 sont situées dans un plan différent de celui de l'axe de torsion défini par la poutre 320, 321 respectivement, la rotation des poutres 316 et 318 auxquelles sont rattachées les jauges 320, 322 respectivement, induit un effort de tension/compression sur les jauges 320, 322. Les moyens de mesure 314 sont associés à la mesure du déplacement des masses d'excitation ME1, ME2 selon l'axe de détection Z et les moyens de mesure 310 sont associés à la mesure du déplacement des masses de détection MD1, MD2 selon l'axe de détection Z.

Le signal fourni par les premiers moyens de détection piézorésistifs est désigné par R1 + $\Delta$R1, et le signal fourni par les deuxièmes moyens de détection piézorésistifs est désigné par R1' + $\Delta$R1'.

Sur la figure 5, il s'agit d'une structure S5 du gyroscope à détection Z comportant deux masses d'excitation ME1, ME2 excitées le long de l'axe X ou Y. Les deux masses d'excitation ME1, ME2 sont reliées par une poutre 416 articulée en rotation sur le substrat autour de l'axe Z. Dans l'exemple représenté, le moyens de suspension de la poutre 416 sont formés par deux poutres 420 concourantes au niveau de l'axe Z. les deuxièmes moyens de détection 414 sont formés par deux jauges piézorésistives de part et d'autre des moyens de suspension 420. Les deux jauges assurent une mesure différentielle.

La structure S5 comporte deux masses de détection MD1, MD2 reliées par une poutre 418 articulée en rotation sur le substrat autour de l'axe Z. Dans l'exemple représenté, les moyens de suspension de la poutre 418 sont formés par deux poutres 422 concourantes au niveau de l'axe Z. Les premiers moyens de détection 410 sont formés par deux jauges piézorésistives 424 de part et d'autre des moyens de suspension 422. Les deux jauges assurent une mesure différentielle.

Selon une autre variante, les moyens de détection peuvent être de type magnétique.

Les masses d'excitation ME1 et ME2 sont mises en mouvement selon X et sous l'effet d'une rotation autour de Z, les deux masses de détection MD1, MD2 se déplacent selon l'axe Y en opposition de phase, et entraînent la poutre 418 selon un mouvement de rotation autour de l'axe Z.

De préférence, les premiers et deuxièmes moyens de détection sont du même type, mais il sera compris que cela n'est pas nécessaire et qu'une structure dans laquelle la détection du déplacement de la masse de détection est capacitive ou piézorésistive, peut comporter une détection piézorésistive ou capacitive respectivement du déplacement de la masse d'excitation.

Le gyroscope selon l'invention comporte également des moyens de traitement du signal de détection provenant de la masse de détection afin de déterminer une vitesse de rotation subie par le gyromètre à partir des forces de Coriolis et de fournir au moins un paramètre de calibration dudit gyroscope.

Les moyens pour déterminer la vitesse de rotation subie par le gyromètre sont bien connus de l'homme du métier et ne seront pas décrits. Nous allons maintenant décrire en détail les moyens de traitement et le procédé mis en oeuvre pour déterminer au moins paramètre permettant une calibration d'un gyroscope et/ou sa recalibration.

La structure de gyroscope selon l'invention délivre deux signaux, un signal représentatif de déplacement de la masse de détection dans la direction de détection et un signal représentatif du déplacement de la masse d'excitation dans la direction de détection.

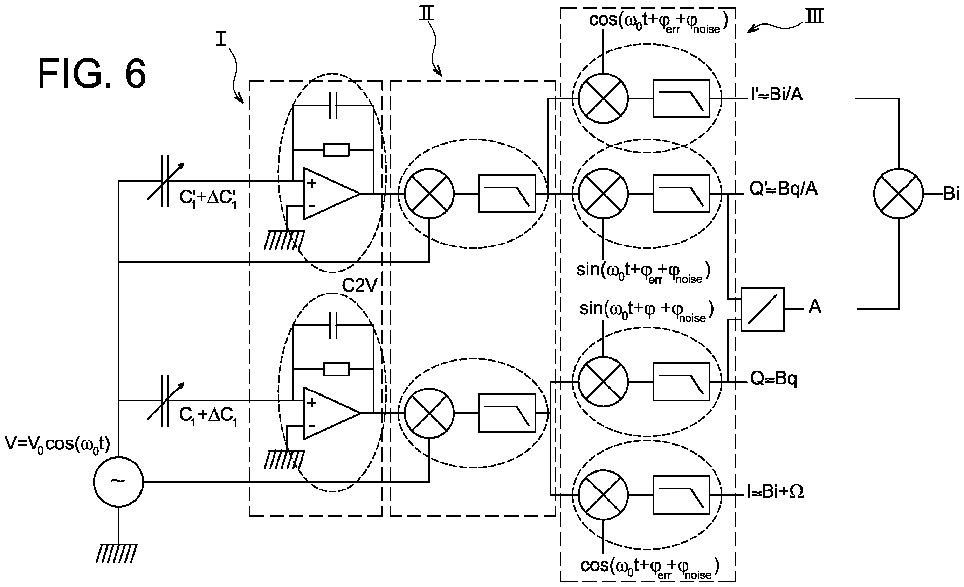

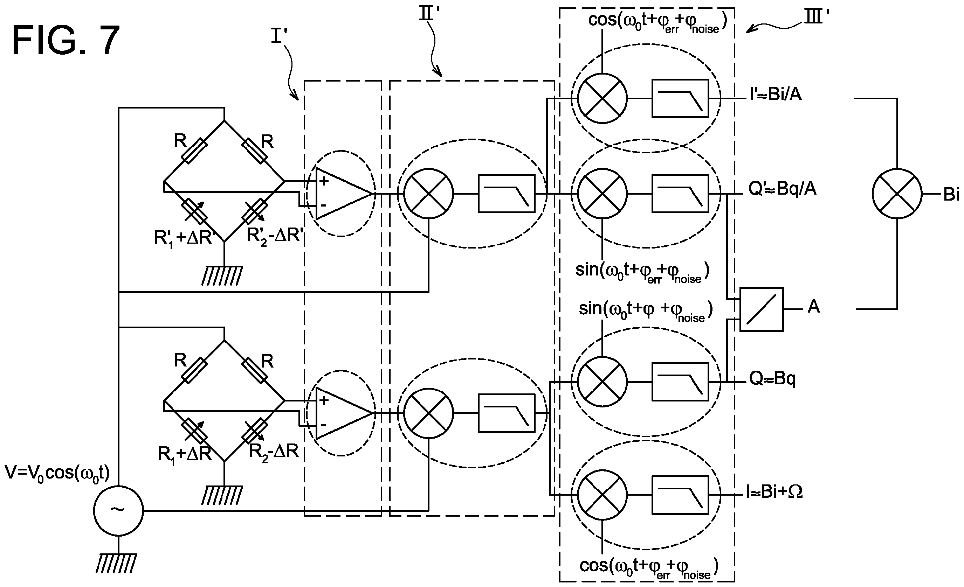

Les moyens de traitement de ces signaux sont représentés schématiquement sur les figures 6 et 7 pour une structure de gyroscope à détection capacitive et pour une structure de gyroscope à détection piézorésistive respectivement.

Dans les exemples représentés, les moyens de traitement appliquent les étapes suivantes aux deux signaux de détection :

- un étape d'amplification des signaux de détection,
- une étape éventuelle de démodulation, en effet en général le signal de détection est modulé par une tension de lecture à une fréquence $f_e=\omega_e/2\pi >> f_0$. Le signal est donc démodulé et filtré pour le ramener à la fréquence $f_0=\omega_0/2\pi$ de l'équation (1),
- une étape de démodulation et de filtre du signal afin d'obtenir la vitesse de rotation de la masse de détection avec une bande passante définie par le dernier filtre.

Concernant l'étape d'amplification, dans le cas d'une détection capacitive, il s'agit d'une étape de transformation d'une variation de capacité en variation de tension, on utilise un étage de lecture capacitif, qui est par exemple un étage C2V. (convertisseur capacité tension). Dans ce cas, l'électrode de la capacité variable est reliée à une entrée d'un amplificateur linéaire, cette même entrée est reliée à la sortie de l'amplificateur par l'intermédiaire d'une capacité Ci et d'une résistance Ri en parallèle.

L'autre entrée de l'amplificateur est mise à la masse. Si une tension $V_0\cos(\omega_e t)$ est appliquée de l'autre côté de la capacité variable, et si $\omega_e >> 1/(RiCi)$, la tension en sortie de l'étage C2V est $-V_0*\Delta C/Ci$.

Dans le cas d'une détection piézorésistive, on utilise un étage de lecture piézorésistive. Les jauges piézorésistives sont, de manière avantageuse, arrangées dans une configuration de pont de Wheatstone. Il s'agit alors de lire une variation de tension, ce qui peut se faire en utilisant un amplificateur linéaire différentiel ou un ensemble d'amplificateur avec entrées différentielles. En particulier, on peut utiliser un ensemble de trois amplificateurs linéaires de manière à constituer un amplificateur dit d'instrumentation, qui peut présenter des bruits de lecture très bas.

A titre d'exemple, on peut utiliser un amplificateur d'instrumentation du AD8428 vendu par Analog Devices ®.

De préférence, les moyens de suspension de la masse d'excitation sont choisis de sorte à présenter une rigidité selon l'axe de détection très supérieure à celle dans la direction d'excitation afin de limiter l'effet de la force de Coriolis par rapport à celle du biais en quadrature.

En effet, la force de Coriolis s'exerce aussi sur la masse d'excitation. Si on compare cette force de Coriolis $F_\Omega$ avec la force équivalente due au biais $F_{Bq}$, on a

$$\frac{F_\Omega}{F_{Bq}} = \frac{2m_1\omega_0 X\Omega}{\alpha k_{y1} X} = \frac{2m_1\omega_0\Omega}{2\dfrac{B_q}{\omega_0}k_{y1}} = \frac{\Omega}{B_q}\left(\frac{\omega_0}{\omega_{0y1}}\right)^2 = \frac{\Omega}{B_q}\frac{k_{x1}}{k_{y1}}\frac{m_1}{m_1+m_2}$$

$k_{y1}$ et $k_{x1}$ sont respectivement les constantes de raideur des moyens de suspension de la masse d'excitation dans la direction de détection et la direction d'excitation.

En choisissant des moyens de suspension de la masse d'excitation tels que $k_{y1} >> k_{x1}$, la perturbation due à la force de Coriolis est inférieure à 2 à 3 ordres de grandeur maximum par rapport à de l'effet dû au biais en quadrature. Par exemple $k_{y1}/k_{x1}$ est supérieur à 100.

Dans l'exemple représenté, les moyens de traitement, dans le cas d'un gyroscope à détection capacitive, comportent des moyens I pour transformer la variation de capacité en variation de tension, éventuellement des moyens de démodulation II et de filtre du signal pour le ramener à une fréquence $f_0=\omega_0/2\pi$ et des moyens de démodulation et de filtre III pour obtenir la vitesse de rotation de la masse de détection MD avec une bande passante définie par le filtre des moyens III.

Dans l'exemple représenté, les moyens de traitement, dans le cas d'un gyroscope à détection piézorésistive, comportent des moyens I' formant amplificateur d'instrumentation qui ont été décrit ci-dessus, éventuellement des moyens de démodulation et de filtre II' du signal pour le ramener à une fréquence $f_0=\omega_0/2\pi$ et des moyens de démodulation et de filtre III' pour obtenir la vitesse de rotation de la masse de détection avec une bande passante définie par le filtre des moyens III'.

Les moyens de traitement délivrent alors :

- à partir du signal de détection de la masse de détection MD, les signaux traités I et Q, tels que Q ~ Bq, le biais en quadrature et I ~ Bi + Ω, la somme du biais en phase et de la vitesse de rotation.
- à partir du signal de détection de la masse d'excitation, les signaux traités I' et Q', tels que Q' ~ Bq/A, le rapport du biais en quadrature Bq et du facteur d'amplification A, et I' ~ Bi/A, le rapport du biais en phase et du facteur d'amplification A.

Il est alors possible de déterminer le facteur d'amplification en calculant le rapport Q/Q'.

On peut également en déduire le biais en phase Bi à tout moment en calculant I'×Q/Q'.

Ainsi, grâce à l'invention, on peut connaître à tout moment le facteur d'amplification A à partir de la relation (I), le biais en phase Bi et le biais en quadrature Bq.

A partir de la connaissance du facteur d'amplification A, il est possible de déterminer la sensibilité de la structure. En effet, la sensibilité dans un mode de fonctionnement en fréquences accordées est donnée par la relation :

$$\frac{Y_\Omega}{\Omega} = \frac{2XA}{\omega_{0exc}}$$

Dans le cas d'un mode de fonctionnement en fréquences non-accordées, la sensibilité est donnée par la relation

$$\frac{Y_\Omega}{\Omega} = \frac{2X}{\omega_{0exc}} A \times (1 - \frac{1}{2A})^2$$

A partir des ces paramètres, il est possible d'effectuer de manière simple une calibration du gyroscope sans avoir à recourir à une table tournante complexe.

En outre, des étapes de recalibration du gyroscope peuvent avoir lieu de manière simplifiée. Par exemple, une étape de recalibration peut être lancée lors d'un changement sensible de la température de l'environnement dans lequel se trouve le gyroscope. En effet, les paramètres obtenus sont obtenus à la température de fonctionnement du gyroscope. Ainsi si on détecte un tel changement de température, on peut lancer une étape de recalibration du gyroscope.

De manière préférée, les étapes de recalibration sont telles que la recalibration est périodique et de manière encore préférée telles que la recalibration est continue.

Une simulation du traitement du signal après la démodulation des mesures va maintenant être décrite, celle-ci ayant été réalisée avec le logiciel Xcos.

Les paramètres pour la simulation sont les suivants :

- fréquence de résonance de l'excitation 20kHz,
- fréquence de résonance de la détection 21kHz,
- facteur de qualité en détection Qs=10000,
- amplification A du résonateur en détection 10,756,
- bruit blanc de mesure 0.01°/s/√Hz,
- erreur de phase du démodulateur $\Phi_{err}$= 1°,
- bruit de phase du démodulateur $\Phi_{noise}$ = $10^{-5}$rad/√Hz,
- signal de biais en quadrature 1000°/s;
- signal de biais en phase -100°/s,
- bande passante du signal mesuré sur la masse de détection 100Hz,
- bande passante du signal mesuré sur la masse d'excitation 1Hz.

La simulation porte sur une durée de 10s, en raison du filtre à 1Hz, les données sont traitées à partir de 2s.

On considère $\Omega$ comme nul, ainsi la mesure I sur la masse de détection donne directement le biais en phase Bi mesurée sur la masse de détection.

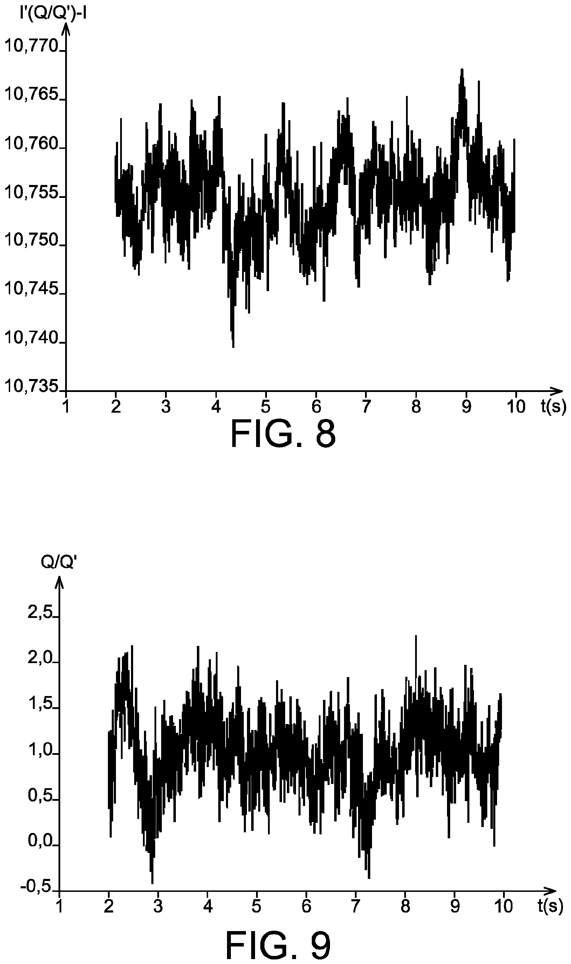

Sur la figure 8, on peut voir représentée la variation du facteur d'amplification A en fonction du temps obtenu par le rapport Q/Q'. En moyenne, A est égal à 10,755 pour une valeur théorique de 10,756, avec une résolution de 0,003.

A partir de ce facteur d'amplification et la mesure I', on peut reconstruire le biais en phase Bi et estimer sa valeur. On obtient dans le cas présent un biais en phase reconstruit de -117,45°/s, au lieu de 118,46°/s mesurée sur la masse de détection MD, qui est donné par le signal I sur la masse de détection MD comme expliqué ci-dessus.

On obtient donc le biais en phase à 1°/s près en moyenne avec une résolution de 0,29°/s, pour une résolution du signal mesuré sur la masse de détection de 0,24°/s. Sur la figure 9, est représenté la variation de la différence entre le biais reconstruit qui est égal à $I'\frac{Q}{Q'}$ et le biais mesuré qui est égal à I en fonction du temps.

Cette différence de 1°/s est due au déphasage induit par le résonateur en détection $\phi_{TF}$.

En tenant compte des erreurs de démodulation, la valeur du ratio Q/Q' vaut :

$$\frac{Q}{Q'} \approx A\left(1 - \frac{B_i}{B_q}\varphi_{TF}\right)$$

Sachant qu'en général, B$_i$<B$_q$ et que dans notre cas, qui est représentatif des cas réels, $\phi_{TF}$=10$^{-3}$ rad, le rapport Q/Q' donne une estimation du coefficient A avec une bonne précision.

En tenant compte des erreurs de démodulation, on obtient une différence entre le biais en phase reconstruit et le biais en phase mesuré :

$$I'\frac{Q}{Q'} - I \approx -B_q\varphi_{TF}$$

On parvient donc à s'affranchir de l'erreur de phase induite par l'électronique, mais pas de celle induite par l'oscillateur en détection.

L'erreur induite par l'oscillateur en détection est faible mais n'est pas connue précisément et peut varier en température.

Des résultats expérimentaux permettent d'évaluer un coefficient en température d'environ 600ppm/K pour $\phi_{TF}$, qui quantifie la dépendance du déphasage $\phi_{TF}$ à la température. Ce coefficient est donc environ 1 ordre de grandeur prédominant par rapport au coefficient en température du biais en quadrature Bq.

$$\frac{\delta\varphi_{TF}}{\varphi_{TF}\delta T} \approx -\frac{\delta Q_{\det}}{Q_{\det}\delta T}$$

Il en résulte à une dérive de 0,6m°/s/K du biais résiduel, ce qui est très faible en comparaison du bais résiduel des gyroscopes de l'état de la technique. En effet, un gyroscope de l'état de la technique présente un biais compris entre +75°/s et -75°/s pour une pleine échelle de 2000°/s et une dérive de biais de 40m°/s/K.

Avantageusement, on choisit un filtre à plus basse fréquence pour filtrer le signal de la masse d'excitation que celui destiné à filtrer le signal sur la masse de détection, ce qui permet d'avoir une précision de mesure comparable entre le traitement du signal de la masse détection et le signal de la masse d'excitation. En effet, si on considère que l'on a besoin d'un flux de données moins important venant de la mesure sur la masse d'excitation, la mesure sur la masse d'excitation peut être filtrée avec un filtre à plus basse fréquence que celui destiné à filtrer le signal sur la masse de détection.

Par exemple, pour une fréquence d'excitation de 20kHz, et un écart nominal de fréquence de 1kHz, le facteur d'amplification est d'environ 10 et donc la mesure sur la masse d'excitation est 10 fois plus bruitée que sur la masse de détection. Si la bande passante est de 100Hz sur la mesure de la masse de détection, on obtient une résolution identique sur la mesure sur la masse d'excitation avec un filtre à 1Hz.

Dans une variante avantageuse, un déphaseur avant la démodulation du signal issu de la masse d'excitation peut être prévu afin de reproduire le déphasage de l'oscillateur de détection. On choisira par exemple, une valeur de phase qui correspond à la moyenne des déphasages induits par l'oscillateur en détection. Le biais reconstruit de chaque gyroscope se trouvera alors rapproché de la valeur nulle.

L'invention permet de simplifier voire d'éviter la calibration des gyroscopes et de déduire en temps réel les évolutions de la sensibilité et/ou du biais d'un gyroscope. En effet, grâce à l'invention il n'est plus nécessaire d'utiliser de tables.

L'invention permet également de simplifier les étapes de recalibration puisqu'elle ne nécessite pas la mise en oeuvre d'autres capteurs, ni un état statique du dispositif. En effet le biais et la sensibilité peuvent être déterminés à tout moment dans le fonctionnement normal du gyromètre. En outre l'invention permet une surveillance de ces paramètres et donc un suivi de l'état de fonctionnement du gyromètre.

Par exemple, dans le cas des produits grands publics pour lesquelles la sensibilité n'a besoin d'être connue qu'à quelques pourcents près, aucune calibration par table tournante n'est nécessaire. La calibration est obtenue uniquement grâce à l'invention et est appliquée continûment ou périodiquement sur le capteur. Il y aura une faible incertitude sur la sensibilité due à l'incertitude sur la valeur d'entrefer dans le cas d'une détection capacitive, ou sur la dimension des jauges piézorésistive dans le cadre d'une détection piézorésistive. En revanche, si on souhaite connaître la sensibilité précisément, une calibration sur table tournante à une seule température sur est suffisante, l'évolution des paramètres est ensuite suivie par le traitement selon l'invention.

L'invention peut s'appliquer à toute architecture possédant une masse d'excitation à un degré de liberté selon le mode d'excitation, par exemple à des gyroscopes de type disque oscillant tel que celui représenté sur la figure 3.

La présente invention est particulièrement intéressante pour les gyroscopes avec des fréquences d'excitation et de détection non-accordées, puisque le facteur d'amplification est davantage réduit : 1 à 100 contre 1000 à 100000 dans le cas de fréquences accordées.

**Revendications**

1. Gyroscope comportant :

   - au moins un oscillateur d'excitation comportant au moins une masse d'excitation (ME) suspendue par rapport à un substrat (2) présentant une seule direction de déplacement en excitation,
   - au moins un oscillateur en détection comportant au moins une masse de détection (MD) suspendue par rapport à la masse d'excitation apte à se déplacer selon la direction d'excitation et selon une direction de détection orthogonale à la direction d'excitation,
   - des moyens d'excitation de la masse d'excitation (ME) dans la direction de déplacement en excitation,
   - des premiers moyens de détection (10) destinés à détecter le déplacement de la masse de détection (MD) selon ladite direction de détection et fournissant un premier signal de détection,

   le gyroscope comportant également :

   - des deuxièmes moyens de détection (14) destinés à détecter le déplacement de la masse d'excitation (ME) selon ladite direction de détection et fournissant un deuxième signal de détection, et
   - des moyens de traitement du premier signal de détection et du second signal de détection de sorte à déterminer une vitesse de rotation subie par le gyroscope et à fournir au moins un paramètre de calibration dudit gyroscope.

2. Gyroscope selon la revendication 1, dans lequel ledit au moins un paramètre de calibration dudit gyroscope est le coefficient d'amplification caractérisant la sensibilité du gyroscope et/ou le biais du gyroscope.

3. Gyroscope selon la revendication 1 ou 2, dans lequel les moyens de traitement du premier signal de détection et du second signal de détection sont tels qu'ils déterminent à partir du premier signal de détection , le biais en quadrature et la somme du biais en phase et de la vitesse de rotation, qu'ils déterminent à partir du deuxième signal de détection, le rapport du biais en phase sur le coefficient d'amplification et le rapport du biais en quadrature sur le coefficient d'amplification, et qu'il déterminent le coefficient d'amplification en effectuant une division du biais en quadrature sur le rapport du biais en quadrature sur le coefficient d'amplification, les moyens de traitement du premier signal de détection et du second signal de détection étant avantageusement tels qu'ils effectuent une multiplication du rapport du biais en phase sur le coefficient d'amplification avec le coefficient d'amplification déterminé par ladite division.

4. Gyroscope selon l'une des revendications 1 à 3, dans lequel les moyens de traitement comportent des moyens d'amplification (I, I') du premier et du deuxième signal de détection et des premiers moyens (III, III') aptes à démoduler les signaux amplifiés, les moyens de traitement comportant avantageusement en outre des deuxièmes moyens (II, II') pour démoduler les signaux amplifiées préalablement aux premiers moyens de démodulation (III, III') et pour filtrer lesdits signaux afin de ramener les signaux démodulés à la fréquence d'actionnement du gyroscope.

5. Gyroscope selon l'une des revendications 1 à 4, dans lequel les premiers et deuxièmes moyens de détection (14) sont de type capacitif, les moyens d'amplification (I) des signaux mesurés comportant avantageusement un amplificateur monté en parallèle avec au moins une capacité.

6. Gyroscope selon l'une des revendications 1 à 4, dans lequel les premiers et deuxièmes moyens de détection sont de type piézorésistif, les moyens d'amplification (I') des signaux mesurés comportant avantageusement un ou plusieurs amplificateurs à entrées différentielles.

7. Gyroscope selon l'une des revendications 1 à 6 en combinaison avec la revendication 4, dans lequel premiers moyens (III, III') aptes à démoduler les signaux amplifiés comportent un filtre du deuxième signal de détection et un filtre du premier signal de détection, le filtre du deuxième signal étant un filtre à bande passante inférieure à celle d'un filtre du premier signal de sorte à avoir une résolution proche ou identique sur le premier signal de détection et le deuxième signal de détection.

8. Gyroscope selon l'une des revendications 1 à 7 en combinaison avec la revendication 4, comportant des moyens de déphasage du deuxième signal de détection de sorte à reproduire un déphasage de l'oscillateur de détection, lesdits moyens de déphasage appliquant ce déphasage avant la démodulation (III, III') du deuxième signal de détection par les premiers moyens de démodulation.

9. Gyroscope selon l'une des revendications 1 à 8, présentant des fréquences d'excitation et de détection non-accordées.

10. Gyroscope selon l'une des revendications 1 à 9, dans lequel le masse d'excitation (Me) est suspendue par rapport au substrat (2) par des moyens de suspension de type ressort, lesdits moyens de suspension présentant une première constante de raideur ($k_{y1}$) selon la direction de détection et une deuxième constante de raideur ($k_{x1}$) selon la direction d'excitation, la première constante de raideur ($k_{y1}$) étant sensiblement supérieure à la deuxième constante de raideur ($k_{x1}$), le rapport de la première constante de raideur ($k_{y1}$) sur la deuxième constante de raideur ($k_{x1}$) étant avantageusement supérieur à 100.

11. Gyroscope selon l'une des revendications 1 à 10, comportant des moyens de connexion en amont des moyens d'amplification pour effectuer de façon périodique la détermination dudit au moins un paramètre de calibration dudit gyroscope.

12. Gyroscope selon l'une des revendications 1 à 11, comportant plusieurs masses d'excitation couplées, lesdites masses étant aptes à se déplacer dans des directions différentes.

13. Procédé de calibration d'un gyroscope comportant au moins un oscillateur d'excitation comportant au moins une masse d'excitation (ME) présentant une seule direction de déplacement en excitation, et au moins un oscillateur de détection comportant au moins une masse de détection (MD) apte à se déplacer selon la direction d'excitation et selon une direction de détection, la direction d'excitation et la direction de détection étant orthogonales, ledit procédé comportant les étapes :

   a) mise en mouvement de la masse d'excitation dans la direction d'excitation et mesure du déplacement de la masse de détection (MD) dans la direction de détection, formant un premier signal de détection,
   b) mesure du déplacement de la masse d'excitation (ME) selon la direction de détection, formant un deuxième signal de détection,
   c) traitement du premier signal de détection et du second signal de détection de sorte à déterminer une vitesse de rotation subie par le gyroscope et à fournir au moins un paramètre de calibration dudit gyroscope,
   d) calibration du gyroscope sur la base de ce paramètre.

14. Procédé de calibration selon la revendication 13, dans lequel l'étape c) de traitement du premier et du deuxième signal comporte :

   - le traitement du premier signal de détection de sorte à obtenir le biais en quadrature (Bq) et la somme du biais en phase et de la vitesse de rotation (Bi + Ω),
   - le traitement du deuxième signal de détection de sorte à obtenir le rapport du biais en phase sur le coefficient d'amplification (Bi/A) et le rapport du biais en quadrature sur le coefficient d'amplification (Bq/A)
   - la détermination du coefficient d'amplification en effectuant une division du biais en quadrature sur le rapport du biais en quadrature sur le coefficient d'amplification

15. Procédé de calibration selon la revendication 13 ou 14, dans lequel l'étape a) comporte les sous-étapes :

   a1) d'amplification et de filtrage du premier signal de détection,
   a2) de démodulation du premier signal amplifié, et

   l'étape b) comporte les sous-étapes :

   b1) d'amplification et de filtrage du deuxième signal de détection,
   b2) de démodulation du deuxième signal amplifié.

16. Procédé de calibration selon la revendication 15, comportant les étapes de démodulation, et de filtrage entre les étapes a1) et a2) et entre les étapes b1) et b2) pour ramener les premier et deuxième signaux amplifiés à la fréquence d'actionnement.

**17.** Procédé de calibration selon la revendication 15 ou 16, dans lequel, dans les cas de signaux de détection capacitifs, les étapes a2) et b2) sont réalisées par un étage de lecture capacitive ou dans les cas de signaux de détection piézorésistifs, les étapes a2) et b2) sont réalisées par un ou plusieurs amplificateurs à entrées différentielles.

**18.** Procédé de calibration selon l'une des revendications 13 à 17, ledit procédé étant mis en oeuvre de façon continue ou périodique ou ponctuellement à la suite d'une variation de l'environnement du gyroscope.

**Patentansprüche**

**1.** Gyroskop, enthaltend:

- zumindest einen Anregungsoszillator, der zumindest eine Anregungsmasse (ME) aufweist, die gegenüber einem Substrat (2) aufgehängt ist und eine einzige Anregungsbewegungsrichtung hat,
- zumindest einen Erfassungsoszillator, der zumindest eine Erfassungsmasse (MD) aufweist, die gegenüber der Anregungsmasse aufgehängt ist und sich in Anregungsrichtung und in einer orthogonal zur Anregungsrichtung verlaufenden Erfassungsrichtung bewegen kann,
- Anregungsmittel zum Anregen der Anregungsmasse (ME) in der Anregungsbewegungsrichtung,
- erste Erfassungsmittel (10), die dazu bestimmt sind, die Bewegung der Erfassungsmasse (MD) in der Erfassungsrichtung zu erfassen, und ein erstes Erfassungssignal liefern,

wobei das Gyroskop ferner enthält:

- zweite Erfassungsmittel (14), die dazu bestimmt sind, die Bewegung der Anregungsmasse (ME) in der Erfassungsrichtung zu erfassen, und ein zweites Erfassungssignal liefern, und
- Mittel zum Verarbeiten des ersten Erfassungssignals und des zweiten Erfassungssignals so, dass eine vom Gyroskop erbrachte Drehzahl ermittelt wird und zumindest ein Kalibrierparameter des Gyroskops bereitgestellt wird.

**2.** Gyroskop nach Anspruch 1, wobei zumindest ein Kalibrierparameter des Gyroskops der Verstärkungskoeffizient ist, der die Sensibilität des Gyroskops und/oder die Messabweichung des Gyroskops kennzeichnet.

**3.** Gyroskop nach Anspruch 1 oder 2, wobei die Verarbeitungsmittel zum Verarbeiten des ersten Erfassungssignals und des zweiten Erfassungssignals derart sind, dass sie ausgehend von dem ersten Erfassungssignal die Messabweichung in Quadratur und die Summe der Messabweichung in Phase und der Drehzahl ermitteln, dass sie ausgehend von dem zweiten Erfassungssignal das Verhältnis der Messabweichung in Phase zum Verstärkungskoeffizienten und das Verhältnis der Messabweichung in Quadratur zum Verstärkungskoeffizienten ermitteln und dass sie den Verstärkungskoeffizienten ermitteln, indem sie eine Division der Messabweichung in Quadratur durch das Verhältnis der Messabweichung in Quadratur zum Verstärkungskoeffizienten durchführen, wobei die Verarbeitungsmittel zum Verarbeiten des ersten Erfassungssignals und des zweiten Erfassungssignals vorteilhaft derart ausgeführt sind, dass sie eine Multiplikation des Verhältnisses der Messabweichung in Phase zum Verstärkungskoeffizienten mit dem durch die Division ermittelten Verstärkungskoeffizienten durchführen.

**4.** Gyroskop nach einem der Ansprüche 1 bis 3, wobei die Verarbeitungsmittel Verstärkungsmittel (I, I') zum Verstärken des ersten und des zweiten Erfassungssignals und erste Mittel (III, III') enthalten, welche die verstärkten Signale demodulieren können, wobei die Verarbeitungsmittel vorteilhaft ferner zweite Mittel (II, II') enthalten, um die verstärkten Signale vor den ersten Demodulationsmitteln (III, III') zu demodulieren und um die Signale zu filtern, um die demodulierten Signale auf die Betriebsfrequenz des Gyroskops zurückzuführen.

**5.** Gyroskop nach einem der Ansprüche 1 bis 4, wobei die ersten und zweiten Erfassungsmittel (14) kapazitiv ausgeführt sind, wobei die Verstärkungsmittel (I) zum Verstärken der Messsignale vorteilhaft einen zu mindestens einer Kapazität parallel geschalteten Verstärker aufweisen.

**6.** Gyroskop nach einem der Ansprüche 1 bis 4, wobei die ersten und zweiten Erfassungsmittel piezoresistiv ausgeführt sind, wobei die Verstärkungsmittel (I') zum Verstärken der Messsignale vorteilhaft einen oder mehrere Verstärker mit Differenzeingängen aufweisen.

**7.** Gyroskop nach einem der Ansprüche 1 bis 6 in Kombination mit Anspruch 4, wobei die ersten Mittel (III, III'), welche die verstärkten Signale demodulieren können, ein Filter für das zweite Erfassungssignal und ein Filter für das erste Erfassungssignal aufweisen, wobei das Filter für das zweite Signal ein Bandpaßfilter ist, das geringer als ein Filter für das erste Signal ist, so dass beim ersten Erfassungssignal und beim zweiten Erfassungssignal eine naheliegende oder identische Auflösung vorliegt.

**8.** Gyroskop nach einem der Ansprüche 1 bis 7 in Kombination mit Anspruch 4, enthaltend Phasenverschiebungsmittel zur Phasenverschiebung des zweiten Erfassungssignals, so dass eine Phasenverschiebung des Erfassungsoszillators wiedergegeben wird, wobei die Phasenverschiebungsmittel diese Phasenverschiebung vor der Demodulation (III, III') des zweiten Erfassungssignals durch die ersten Demodulationsmittel aufprägen.

**9.** Gyroskop nach einem der Ansprüche 1 bis 8, mit nicht abgestimmten Anregungs- und Erfassungsfrequenzen.

**10.** Gyroskop nach einem der Ansprüche 1 bis 9, wobei die Anregungsmasse (Me) bezüglich des Substrats (2) über federartige Aufhängungsmittel aufgehängt ist, wobei die Aufhängungsmittel eine erste Federkonstante ($k_{y1}$) in der Erfassungsrichtung und eine zweite Federkonstante ($k_{x1}$) in der Anregungsrichtung aufweisen, wobei die erste Federkonstante ($k_{y1}$) merklich höher als die zweite Federkonstante ($k_{x1}$) ist, wobei das Verhältnis der ersten Federkonstante ($k_{y1}$) zur zweiten Federkonstante ($k_{x1}$) vorteilhaft höher als 100 ist.

**11.** Gyroskop nach einem der Ansprüche 1 bis 10, enthaltend den Verstärkungsmitteln vorgelagerte Anschlussmittel zum periodischen Durchführen der Ermittlung des zumindest einen Kalibrierparameters des Gyroskops.

**12.** Gyroskop nach einem der Ansprüche 1 bis 11, enthaltend mehrere gekoppelte Anregungsmassen, wobei die Massen sich in verschiedenen Richtungen bewegen können.

**13.** Verfahren zum Kalibrieren eines Gyroskops, enthaltend zumindest einen Anregungsoszillator, der zumindest eine Anregungsmasse (ME) aufweist, die eine einzige Anregungsbewegungsrichtung hat, und zumindest einen Erfassungsoszillator, der zumindest eine Erfassungsmasse (MD) aufweist, die sich in Anregungsrichtung und in einer Erfassungsrichtung bewegen kann, wobei die Anregungsrichtung und die Erfassungsrichtung orthogonal verlaufen, wobei das Verfahren die nachfolgenden Schritte umfasst:

a) Inbewegungsetzen der Anregungsmasse in der Anregungsrichtung und Messen der Bewegung der Erfassungsmasse (MD) in der Erfassungsrichtung, wobei ein erstes Erfassungssignal gebildet wird,
b) Messen der Bewegung der Anregungsmasse (ME) in der Erfassungsrichtung, wobei ein zweites Erfassungssignal gebildet wird,
c) Verarbeiten des ersten Erfassungssignals und des zweiten Erfassungssignals so, dass eine vom Gyroskop erbrachte Drehzahl ermittelt und zumindest ein Kalibrierparameter zum Kalibrieren des Gyroskops bereitgestellt wird,
d) Kalibieren des Gyroskops auf Grundlage dieses Parameters.

**14.** Kalibrierverfahren nach Anspruch 13, wobei der Schritt c) der Verarbeitung des ersten und des zweiten Signals umfasst:

- Verarbeiten des ersten Erfassungssignals so, dass die Messabweichung in Quadratur (Bq) und die Summe der Messabweichung in Phase und der Drehzahl (Bi +$\Omega$) erhalten wird,
- Verarbeiten des zweiten Erfassungssignals so, dass das Verhältnis der Messabweichung in Phase zum Verstärkungskoeffizienten (Bi/A) und das Verhältnis der Messabweichung in Quadratur zum Verstärkungskoeffizienten (Bq/A) erhalten wird,
- Ermitteln des Verstärkungskoeffizienten, indem eine Division der Messabweichung in Quadratur durch das Verhältnis der Messabweichung in Quadratur zum Verstärkungskoeffizienten erfolgt.

**15.** Kalibrierverfahren nach Anspruch 13 oder 14, wobei der Schritt a) die nachfolgenden Unterschritte umfasst:

a1) Verstärken und Filtern des ersten Erfassungssignals,
a2) Demodulieren des ersten verstärkten Signals, und

der Schritt b) die nachfolgenden Unterschritte umfasst:

b1) Verstärken und Filtern des zweiten Erfassungssignals,

b2) Demodulieren des zweiten verstärkten Signals.

16. Kalibrierverfahren nach Anspruch 15, umfassend die Schritte der Demodulation und Filterung zwischen den Schritten a1) und a2) und zwischen den Schritten b1) und b2), um das erste und das zweite verstärkte Signal auf die Betriebsfrequenz zurückzuführen.

17. Kalibrierverfahren nach Anspruch 15 oder 16, wobei im Falle von kapazitiven Erfassungssignalen die Schritte a2) und b2) über eine kapazitive Lesestufe erfolgen oder im Falle von piezoresistiven Erfassungssignalen die Schritte a2) und b2) über einen oder mehrere Verstärker mit Differenzeingängen erfolgen.

18. Kalibrierverfahren nach einem der Ansprüche 13 bis 17, wobei das Verfahren kontinuierlich oder periodisch oder punktuell nach einer Änderung der Umgebung des Gyroskops durchgeführt wird.

**Claims**

1. Gyroscope comprising:

   - at least one excitation oscillator comprising at least one excitation mass (ME) suspended with respect to a substrate (2) having a single direction of excitation movement,
   - at least one detection oscillator comprising at least one detection mass (MD) suspended with respect to the excitation mass able to move according to the excitation direction and according to a detection direction orthogonal to the excitation direction,
   - means for exciting the excitation mass (ME) in the direction of excitation movement,
   - first detection means (10) intended to detect the movement of the detection mass (MD) according to said detection direction and supplying a first detection signal,

   The gyroscope further comprising:

   - second detection means (14) intended to detect the movement of the excitation mass (ME) according to said detection direction and supplying a second detection signal, and
   - means for processing the first detection signal and the second detection signal in such a way as to determine a rotation speed that the gyroscope is subjected to and to supply at least one calibration parameter of said gyroscope.

2. Gyroscope according to claim 1, wherein said at least one calibration parameter of said gyroscope is the amplification coefficient that characterises the sensitivity of the gyroscope and/or the bias of the gyroscope.

3. Gyroscope according to claim 1 or 2, wherein the means for processing the first detection signal and the second detection signal are such that they determine using the first detection signal, the quadrature bias and the sum of the phase bias and of the rotation speed, that they determine using the second detection signal, the ratio of the phase bias over the amplification coefficient and the ratio of the quadrature bias over the amplification coefficient, and that they determine the amplification coefficient by dividing the quadrature bias on the ratio of the quadrature bias over the amplification coefficient, the means for processing the first detection signal and the second detection signal being advantageously such that they carry out a multiplication of the ratio of the phase bias over the amplification coefficient with the amplification coefficient determined by said division.

4. Gyroscope according to one of claims 1 to 3, wherein the means for processing comprise means for amplifying (I, I') the first and the second detection signal and first means (III, III') able to demodulate the amplified signals, the means for processing further comprising advantageously second means (II, II') for demodulating the amplified signals prior to the first means for demodulating (III, III') and for filtering said signals in order to bring the demodulated signals to the actuating frequency of the gyroscope.

5. Gyroscope according to one of claims 1 to 4, wherein the first and second detection means (14) are of the capacitive type, the means for amplifying (I) signals measured including advantageously an amplifier mounted in parallel with at least one capacitor.

6. Gyroscope according to one of claims 1 to 4, wherein the first and second detection means are of the piezoresistive type, the amplifying means (I') of the signals measured including advantagesously one or several amplifiers with differential inputs.

7. Gyroscope according to one of claims 1 to 6 in combination with claim 4, wherein first means (III, III') able to demodulate the amplified signals comprise a filter of the second detection signal and a filter of the first detection signal, with the filter of the second signal being a filter with a band-pass less than that of a filter of the first signal in such a way as to have a close or identical resolution on the first detection signal and the second detection signal.

8. Gyroscope according to one of claims 1 to 7 in combination with claim 4, comprising means for shifting the second detection signal in such a way as to reproduce a shifting of the detection oscillator, with said means for shifting applying this shifting before the demodulation (III, III') of the second detection signal by the first means for demodulating.

9. Gyroscope according to one of claims 1 to 8 having excitation and detection frequencies that are not tuned.

10. Gyroscope according to one of claims 1 to 9, wherein the excitation mass (ME) is suspended with respect to the substrate (2) by means of suspension of the spring type, said means of suspension having a first spring constant ($k_{y1}$) according to the direction of detection and a second spring constant ($k_{x1}$) according to the excitation direction, with the first spring constant ($k_{y1}$) being substantially greater than the second spring constant ($k_{x1}$), the ratio of the first spring constant ($k_{y1}$) over the second spring constant ($k_{x1}$) being advantageously greater than 100.

11. Gyroscope according to one of claims 1 to 10, comprising means of connection upstream of the means for amplifying in order to periodically determining said at least one calibration parameter of said gyroscope.

12. Gyroscope according to one of claims 1 to 11, comprising several coupled excitation masses, said masses being able to move in different directions.

13. Method for calibrating a gyroscope comprising at least one excitation oscillator comprising at least one excitation mass (ME) having a single direction of excitation movement, and at least one detection oscillator comprising at least one detection mass (MD) able to move according to the excitation direction and according to a detection direction, the exication direction and the detection direction being orthogonal to each other, comprising the steps of:

a) moving of the excitation mass in the excitation direction and measuring of the displacement of the detection mass (MD) in the detection direction, forming a first detection signal,
b) measuring the movement of the excitation mass (ME) according to the direction of detection, forming a second detection signal,
c) processing of the first detection signal and of the second detection signal in such a way as to determine a rotation speed that the gyroscope is subjected to and to supply at least one calibration parameter of said gyroscope,
d) calibrating the gyroscope based on this parameter.

14. Method for calibrating according to claim 13, wherein the step c) of processing the first and the second signal comprises:

- the processing of the first detection signal in such a way as to obtain the quadrature bias (Bq) and the sum of the phase bias and of the rotation speed (Bi + $\Omega$),
- the processing of the second detection signal in such a way as to obtain the ratio of the phase bias over the amplification coefficient (Bi/A) and the ratio of the quadrature bias over the amplification coefficient (Bq/A)
- the determination of the amplification coefficient by carrying out a division of the quadrature bias on the ratio of the quadrature bias over the amplification coefficient

15. Method for calibrating according to claim 13 or 14, wherein the step a) comprises the sub-steps of:

a1) amplifying and of filtering the first detection signal,
a2) demodulating the first amplified signal, and

the step b) comprises the sub-steps of:

b1) amplifying and of filtering the second detection signal,

b2) demodulating the second amplified signal.

**16.** Method for calibrating according to claim 15, comprising the steps of demodulating and filtering between the steps a1) and a2) and between the steps b1) and b2) in order to bring the first and second amplified signals to the actuating frequency.

**17.** Method for calibrating according to claim 15 or 16, wherein, in the cases of capacitive detection signals, the steps a2) and b2) are carried out by a stage of capacitive reading, or in the cases of piezoresistive detection signals, the steps a2) and b2) are carried out by one or several amplifiers with differential inputs.

**18.** Method for calibrating according to one of claims 13 to 17, said method being implemented continuously or periodically or selectively following a variation in the environment of the gyroscope.

# FIG. 1

## FIG. 2A

## FIG. 2B

FIG. 3

FIG. 4

FIG. 5

EP 2 936 056 B1

FIG. 6

FIG. 7

$V = V_0 \cos(\omega_0 t)$

$R$    $R$

$R'_1 + \Delta R'$    $R'_2 - \Delta R'$

$R$    $R$

$R_1 + \Delta R$    $R_2 - \Delta R$

I'

II'

III'

$\cos(\omega_0 t + \varphi_{err} + \varphi_{noise})$

$I' \approx Bi/A$

$Q' \approx Bq/A$

$\sin(\omega_0 t + \varphi_{err} + \varphi_{noise})$

$\sin(\omega_0 t + \varphi + \varphi_{noise})$

$Q \approx Bq$

$A$

$\cos(\omega_0 t + \varphi_{err} + \varphi_{noise})$

$I \approx Bi + \Omega$

$Bi$

EP 2 936 056 B1

FIG. 8

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6209383 B
- US 20110172820 D
- US 20110178707 A
- FR 2953012 A1

**Littérature non-brevet citée dans la description**

- Modeling and simulation of non-idealities in a Z-axis CMOS-MEMS gyroscope. **S. V. LYER.** Ph.D. dissertation, Dept. Elect. and Comp Eng. Carneggie Mellon Univ, 2003
- **E. TATAR, ; S. E. ALPER ; T. AKIN.** Effect of quadrature error on the performance of a fully decoupled MEMS gyroscope. *Proc. IEEE MEMS 2011,* 23 Janvier 2011, 569-572
- **P. MERZ ; W. PILZ ; F. SENGER ; K. REIMER ; M. GROUCHKO ; T. PANDHUMSOPORN ; W. BOSCH ; A. COFER ; S. LASSIG.** Impact of DRIE on Vibratory MEMS gyroscope performances. *Proc. Transducers&Eurosensors 2007,* 1187-1190
- **M. S. WEINBERG ; A. KOUREPENIS ; ERROR SOURCES IN IN-PLANE SILICON TUNING-FORK MEMS GYROSCOPES.** *Journal of Microelectromechanical Systems,* Juin 2006, vol. 15 (3), 42-54